# EUROPEAN PATENT SPECIFICATION

(11) **EP 0 412 871 B1**
(45) Date of publication and mention of the grant of the patent: **20.10.1993**
(21) Application number: 90402166.4
(22) Date of filing: 27.07.1990
(51) Int. Cl.: F15B 13/042

(54) **Control valve assembly for pressurized oil**
Steuerventileinrichtung für Drucköl
Dispositif de commande de valve pour huile sous pression

(30) Priority: 09.08.1989 JP 207673/89
(43) Date of publication of application: 13.02.1991
(73) Proprietor: KABUSHIKI KAISHA KOSMEK, Kobe-shi, Hyogo (JP)
(72) Inventor: Yonezawa, Keitaro, Kobe-shi (JP)
(74) Representative: Bonnetat, Christian

(56) References cited:
- DE-A- 1 750 483
- FR-A- 2 079 900
- FR-A- 2 328 147
- US-A- 3 575 211

## Description

### BACKGROUND OF THE INVENTION

### 1. Field of the Invention

The present invention relates to a control valve assembly adapted to be used for supplying and discharging a pressurized oil to and from a single acting hydraulic cylinder, and more specifically to a control valve assembly of the type adapted to prevent a leakage of a pressurized oil between a valve member and a valve seat by employing a poppet valve as valve members to be inserted in to a valve chamber.

### 2. Prior Art

The present invention resides in an improvement of a control valve assembly of the type described in JP-B-1-31067 ( referred to as the first conventional embodiment hereinafter ) or in JP-A-58-170906 ( referred to as the second conventional embodiment hereinafter ).

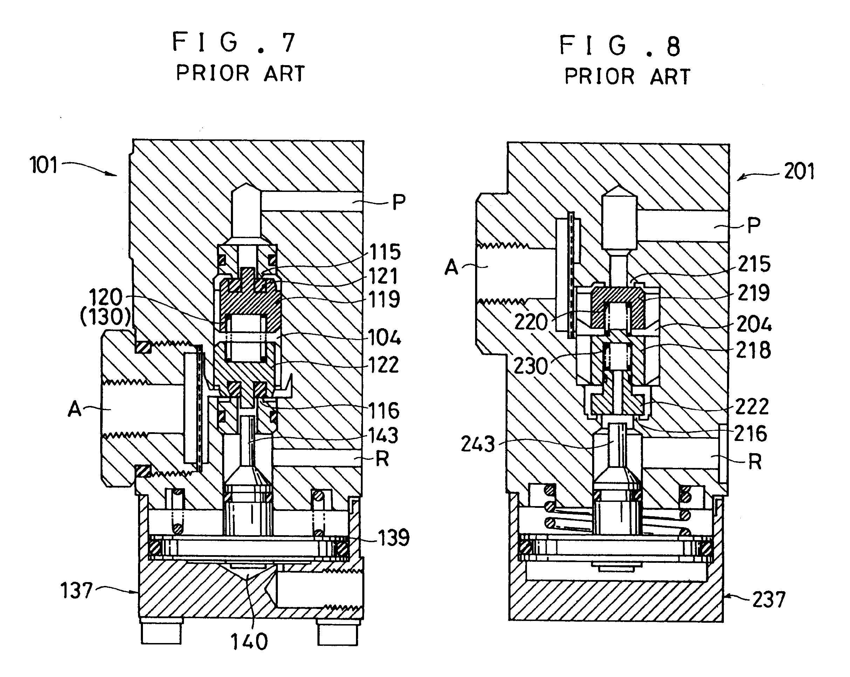

These first and second conventional embodiments were previously proposed by the inventor of the present invention. The basic construction thereof is as follows as shown in Fig. 7 ( for the first conventional embodiment ) or in Fig. 8 ( for the second conventional embodiment ).

In a valve chamber 104, 204 of a valve assembly 101, 201 there are provided a pressure supply port P opened on the upper end side as the first end side thereof, a return port R opened on the lower end side as the second end side thereof and a working port A opened at a position out of both those ports P, R respectively.

A pressure supply valve seat 115, 215 is formed at the outer peripheral portion of the pressure supply port P, and a return valve seat 116, 216 is formed at the outer peripheral portion of the return port R. A check valve member 119, 219 is resiliently urged to the pressure supply valve seat 115, 215 by means of a check valve member closing spring 120, 220. A return valve member 122, 222 is resiliently urged to the return valve seat 116, 216 by means of a return valve member closing spring 130, 230.

A return operation means 137, 237 is disposed outside the lower end portion of the valve chamber 104, 204, and a valve opening member 143, 243 is disposed opposedly to the return valve member 122, 222 from the side of the return port R.

The aforementioned valve assembly 101, 201 operates as follows.

In the case that the return operation means 137, 237 is not operated, firstly the return valve member 122, 222 is brought into contact with the return valve seat 116, 216 for valve closing by means of a resultant force obtained from a resilient force of the return valve member closing spring 130, 230 and an interior pressure of the valve chamber 104, 204, and the pressurized oil within the pressure supply port P pushes and opens the check valve member 119, 219 so as to be supplied to the valve chamber 104, 204 and the working port A and to provide a pressure supplied condition for the valve assembly. Subsequently, when the interior pressure within the valve chamber 104, 204 reaches a predetermined pressure, the check valve member 119, 219 is brought into contact with the pressure supply valve seat 115, 215 for valve closing by means of a resilient force of the check valve member closing spring 120, 220 so as to provide a pressure keeping condition for the valve assembly.

Under the aforementioned pressure keeping condition, when the return operation means 137, 237 is operated, the valve opening member 143, 243 is advanced upward so that the return valve member 122, 222 can be pushed and opened by means of the leading end portion of the valve opening member 143, 243. Thereby, the pressurized oils within the working port A and the valve chamber 104, 204 are discharged to the return port R.

In the above-mentioned basic construction, the first and second conventional embodiments have the following construction for assembling the check valve member 119, 219 and the return valve member 122, 222 within the valve chamber 104, 204.

### [Construction of First Conventional Embodiment]: refer to Fig. 7.

The check valve member 119 and the return valve member 122 are inserted into the valve chamber 104 composed of one chamber, on the upside and on the downside respectively. The check valve member closing spring 120 and the return valve member closing spring 130 are formed as one valve closing spring mounted between both the valve members 119, 122. A resilient sealing member 121 is interposed between the check valve member 119 and the pressure supply valve seat 115. When the return operation means 137 is operated, the resilient sealing member 121 of the check valve member 119 is brought into contact with the pressure supplying valve seat 115 for valve closing by means of the valve opening member 143 through the return valve member 122 so that the pressurized oil within the pressure supply port P can be prevented from leaking into the valve chamber 104.

### [Construction of Second Conventional Embodiment]: refer to Fig. 8.

In this embodiment, the check valve member 219, a movable spring receptacle 218 and the return valve member 222 are inserted in order into the valve chamber 204 composed of one chamber similarly to the aforementioned first conventional embodiment. The check valve member closing spring 220 is mounted between the check valve member 219 and the movable spring receptacle 218. The return valve member closing spring 230 is mounted between the movable spring receptacle 218 and the return valve member 222. The check valve member 219 and the pressure supply valve seat 215 both of which are made of a hard sealing material are brought into direct contact with each other for valve closing. When the return operation means 237 is operated, the check valve member 219 is brought into contact, namely metal-to-metal contact with the pressure supplying valve seat 215 by means of the valve opening member 243 through the return valve member 222 and the movable spring receptacle 218 in order so that the pressurized oil within the pressure supply port P can be prevented from leaking into the valve chamber 204.

There are following problems associated with the aforementioned respective conventional embodiments.

### [Problems of First Conventional Embodiment]: refer to Fig. 7.

Under the pressure released condition having actuated the return operation means 137, the resilient sealing member 121 of the check valve member 119 is strongly compressed against the pressure supply valve seat 115 by means of a pressing force of the valve opening member 143. Therefore, when the number of returning operations is accumulated, the resilient sealing member 121 is apt to cause a plastic deformation which shortens its service life.

By the way, in the case that the return operation means 137 is of a pneumatic type as shown in the figure, the service life of the resilient sealing member 121 is further shortened due to the following reasons.

Generally, a pressurized air supplied from a pressurized air supply line to a pneumatic actuation chamber 140 of the return operation means 137 reaches a predetermined pressure with repeating a pressure pulsation caused by a flow resistance of the pressurized air supply line and an inertia effect. Therefore, during the pressure rising of every pressure pulsation a received pressure of a pneumatic piston 139 surpasses a pressure received thereby from the pressure supply port P so as to close the check valve member 119. On the other hand, during the pressure lowering of the pressure pulsation the pressure received by the pneumatic piston 139 from the pressure supply port P surpasses the received pressure thereof so as to open the check valve member 119. These valve closing operations and the valve opening operations are repeated. During the valve closing operation of the check valve member 119, since the pressurized oil flows at an ultrahigh speed through a narrow flow passage between the pressure supply valve seat 115 and the valve surface of the check valve member 119 just before the valve surface is brought into contact with the pressure supply valve seat 115 for valve closing, the resilient sealing member 121 is cut out and the service life thereof is extremely shortened.

### [Problems of Second Conventional Embodiment]: refer to Fig. 8.

Advantageously this embodiment is able to solve the problems of the aforementioned first conventional embodiment by such a construction as bringing both the check valve member 219 and the pressure supply valve seat 215 made of a hard material into direct contact, namely metal-to-metal contact with each other for valve closing, but it is accompanied with following other problems.

During the pressure keeping condition in which both the valve members 219, 222 are closed by the pressure within the valve chamber 204, in order to surely prevent a leakage of the pressurized oil from the valve chamber 204 into the pressure supply port P even though the pressurized oil supply line on the upstream side of the pressure supply port P causes a little pressure leakage, it is necessary to employ the strong check valve member closing spring 220 of a magnitude sufficient to deform a metal because the check valve member 219 undergoes a metal touching. Therefore, during the pressure supply period for supplying the pressurized oil from the pressure supply port P to the valve chamber 204, since a cracking pressure is so high and a valve opening lift is so small as to provide the pressurized oil with a large pressure loss, a working pressure within the working port A is lowered.

In the case that the control valve assembly 201 for the pressurized oil is employed in a low pressure hydraulic line a very bad influence is provided by the problem of that working pressure lowering because a percentage of the pressure loss relative to the supplied pressure becomes larger.

### SUMMARY OF THE INVENTION

The present invention is directed to solving the problems of the aforementioned respective conventional embodiments and has for its object to extend the sealing service life of the check valve member and to lessen a lowering magnitude of the working pressure within the working port.

For accomplishing the above-mentioned objects, the control valve assembly for a pressurized oil comprising :
- a valve chamber having a first end side and a second end side opposed to each other ;
- a pressure supply port opened to the first end side of the valve chamber ;
- a return port opened to the second end side of the valve chamber ;
- a working port opened to the valve chamber at a location out of both these ports ;
- a pressure supply valve seat formed in the opening edge portion of said pressure supply port ;
- a return valve seat formed in the opening edge portion of said return port ;
- a check valve member inserted into the first end side of the valve chamber and resiliently urged to the pressure supply valve seat for valve closing by means of a check valve member closing spring ;
- a return valve member inserted into the second end side of the valve chamber and resiliently urged to the return valve seat by means of a return valve member closing spring ; and
- a return operation means provided with a valve opening member adapted to push the return valve member toward the first end side,

is characterized, according to the invention, in that the valve chamber is divided into a first chamber on the first end side and a second chamber on the second end side by means of a intermediaire partition wall provided with a communication hole between both chambers, and in that it comprises a short circuit prevention valve member inserted into said second chamber, and a short-circuit prevention valve seat formed in the opening edge portion of the communication hole on the side of the second chamber, said short-circuit prevention valve member and said short-circuit prevention valve seat being brought into contact with each other for valve closing through hard sealing members, and under a pressure released condition in which said return operation means is operated, said short-circuit prevention valve member being brought into contact with the short-circuit prevention valve seat for valve closing through the return valve member by means of said valve opening member advanced toward the first end side, and thereby a pressurized oil within said pressure supply port being prevented from leaking from the first chamber to the second chamber.

Incidentally, in the above-mentioned construction, one side portion of the valve chamber may include not only a deep end surface on the first end side of the valve chamber but also a peripheral surface on the second end side of the valve chamber. Namely, instead that the pressure supply port and the first chamber are arranged substantially coaxially with the second chamber, it may be arranged so as to face in such a direction as intersecting the axis of the second chamber.

Since the present invention is constructed as mentioned above, the following advantages are provided.

When the valve assembly is changed over to the pressure released condition, the pushing force of the return operation means is received by means of the short-circuit prevention seat through the short-circuit prevention valve member so as not to act on the resilient sealing member between the check valve member and the pressure supply valve seat. Therefore, even though the number of the operations of the return operation means is accumulated, the resilient state of the resilient sealing member can be kept in a good condition for a long time and the sealing service life of the check valve member becomes longer.

When the valve assembly is changed over to the pressure keeping condition by bringing the valve surface of the check valve member into sealing contact with the pressure supply valve seat, the resilient force of the check valve member closing spring can be small merely enough to cause the resilient deformation of the resilient sealing member such as a rubber and the like. Therefore, under the pressure supply condition, since the check valve member can make. the cracking pressure lower and have a large valve opening lift so as to lessen a pressure loss of the pressurized oil, a lowering magnitude of the working pressure with in the working port is reduced.

Accordingly, an extension of the sealing service life of the check valve member can coexist with a reduction of the working pressure lowering.

The foregoing and other objects and attendant advantages of the present invention will be readily appreciated as the same be comes better understood by reference to the following detailed description when considered by the accompanying drawings, wherein:

### BRIEF DESCRIPTION OF THE DRAWINGS

Figures 1 through 6 show embodiments of the present invention;

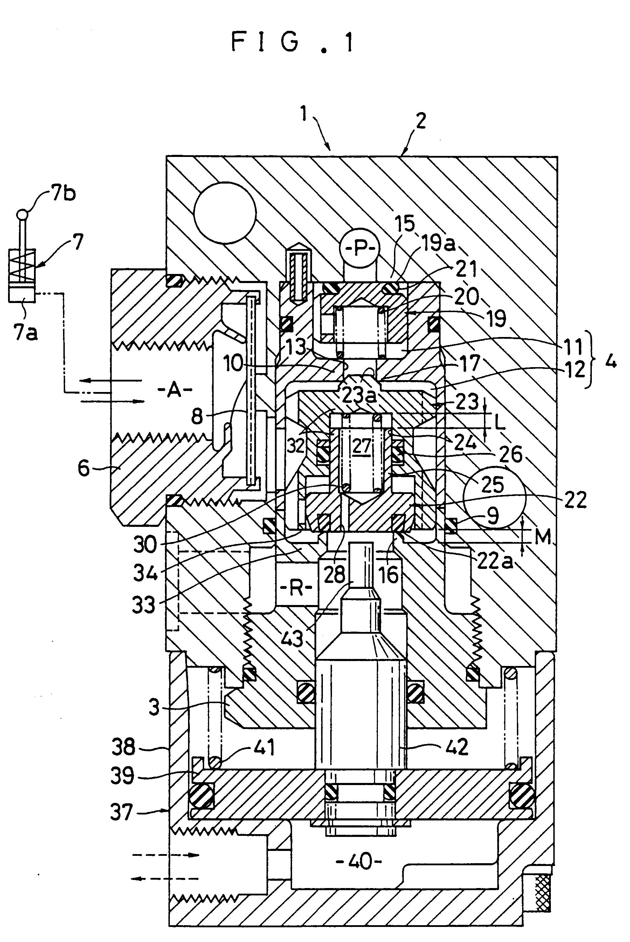

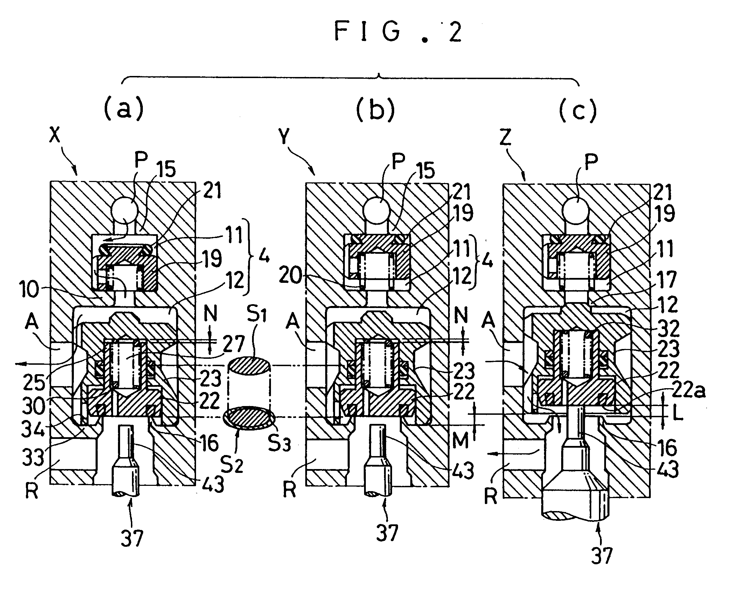

Figures 1 and 2 show a first embodiment thereof;
Figure 1 is a vertical sectional view of a control valve assembly for a pressurized oil;
Figure 2 is an explanatory view of an operation of the valve assembly;
Figure 2(a) is a view showing a pressure supply condition;
Figure 2(b) is a view showing a pressure keeping condition;
Figure 2(c) is a view showing a pressure released condition;
Figures 3, 4 and 5 show a second embodiment, a third embodiment and a fourth embodiment respectively, and are partial views corresponding to Fig. 1;
Figure 6 shows a fifth embodiment and is a view corresponding to Fig. 1;
Figure 7 shows a first conventional embodiment and is a view corresponding to Fig. 1; and
Figure 8 shows a second conventional embodiment and is a view corresponding to Fig. 1.

### DESCRIPTION OF THE PREFERRED EMBODIMENTS

Now, the embodiments of the present invention will be explained with reference to the drawings hereinafter.

### [First Embodiment]

Figs. 1 and 2 show a first embodiment.

In Fig. 1, a valve cover 3 is threadably and oil-tightly secured to the lower portion of a valve box 2 of a control valve assembly 1 for a pressurized oil so that a valve chamber 4 is so formed as to extend vertically along the valve box 2 and the valve cover 3. A pressure supply port P is opened in the upper portion of the valve chamber 4 as the first end side thereof. The pressure supply port P is connected to a delivery port of a hydraulic pump ( not illustrated ). A return port R is opened in the lower portion of the valve chamber 4 as the second end side thereof. The return port R is connected to an oil tank ( not illustrated ). A working port A is opened in the peripheral wall of the valve chamber 4 at the location out of both these ports P, R. The working port A is connected to a hydraulic oil chamber 7a of a hydraulic cylinder 7 of a single acting spring returned type through a mouth piece 6 threadably secured to the valve box 2. A filter 8 is disposed within the mouth piece 6. Incidentally, the valve cover 3 is separated up and down at the position just above a valve chamber sealing member 9 and is composed of two parts.

The valve chamber 4 is divided to a first chamber 11 and a second chamber 12 by an intermediate partition wall 10 disposed at the upper portion within the valve chamber 4. These first and second chambers 11, 12 are intercommunicated with each other through a communication hole 13 opened in the intermediate partition wall 10.

A pressure supply valve seat 15 is formed in the opening edge portion of the pressure supply port P so as to face the first chamber 11. A return valve seat 16 is formed in the opening edge portion of the return port R so as to face the second chamber 12. Further, a short-circuit prevention valve seat 17 is formed in the opening edge of the communication hole 13 so as to face the second chamber 12.

The check valve member 19 is inserted into the first chamber 11, and the check valve member 19 is resiliently urged to the pressure supply valve seat 15 by means of a check valve member closing spring 20. The valve surface 19a of the check valve member 19 is composed of a resilient sealing member 21 made of a rubber. Therefore, the the check valve member closing spring 20 can be such one as having a small resilient force of a magnitude merely sufficient to resiliently deform the rubber.

A return valve member 22 and a short-circuit prevention valve member 23 are inserted into the second chamber 12 in order from below. A piston portion 25 of the return valve member 22 is vertically movably and oil-tightly inserted into a fitting hole 24 concaved in the lower end surface of the short-circuit prevention valve member 23, through an O-ring 26. Thereby, a received pressure removing chamber 27 is disposed between both the valve members 22, 23 in a partitioned state from the second chamber 12. The received pressure removing chamber 27 is formed, as shown in Fig. 2, so that its received pressure removing cross sectional area S₁ is smaller than a pressure non-receiving cross sectional area S₂ of the return valve seat 16 and is communicated with the return port R through a communication hole 28 formed in the return valve member 22. By means of a return valve member closing spring 30 mounted between both the valve members 22, 23, the return valve member 22 is resiliently urged to the return valve seat 16 for valve closing and the short-circuit prevention valve member 23 is resiliently urged to the short-circuit prevention valve seat 17 for valve closing. The valve surface 22a of the return valve member 22 is made of a synthetic resin such as a fluororesin and the like. The valve surface 23a of the short-circuit prevention valve member 23 and the short-circuit prevention valve seat 17 are made of a metal so as to be brought into metal-to-metal contact with each other for valve closing.

Between both the valve members 22, 23 a valve opening clearance L and a short-circuit prevention transmitting portion 32 are interposed in the vertical direction. The short-circuit prevention transmitting portion 32 is composed of the upper end portion of the piston portion 25 of the return valve member 22 and the bottom portion of the fitting hole 24.

Further, a stopper portion 33 for limiting the downward valve opening movement of the short-circuit prevention valve member 23 to a valve opening lift M is formed in the lower wall of the interior wall of the second chamber 12. A stopped portion 34 is projected downward from the short-circuit prevention valve member 23 so as to be opposed to the stopper portion 33. The aforementioned valve opening lift M is set in a smaller dimension than the aforementioned valve opening clearance L.

A return operation means 37 is disposed outside the lower end side of the valve chamber 4. The return operation means 37 is of a pneumatic single acting spring returned type. That is, a piston 39 is inserted into a pneumatic cylinder 38 fixedly secured to the lower portion of the valve box 2 so as to be vertically slidable in an air tight manner. An actuation chamber 40 is formed below the piston 39, and a return spring 41 is mounted on the piston 39. A valve opening member 43 for the return valve member 22 is formed in the upper portion of a piston rod 42 projected from the upper side of the piston 39, and the valve opening member 43 is opposed to the return valve member 22 from the side of the return port R.

The aforementioned control valve assembly 1 for the pressurized oil functions as follows.

As shown in Fig. 1, under the no load condition in which a hydraulic pressure doesn't act in both the ports P, A and a pressurized air has been discharged from the actuation chamber 40 of the return operation means 37, the check valve member 19 is closed by a resilient force of the check valve member closing spring 20, and the return valve member 22 and the short-circuit prevention valve member 23 are closed by a resilient force of the return valve member closing spring 30.

When the hydraulic cylinder 7 is so driven as to extend, a pressurized oil is supplied from a hydraulic pump ( not illustrated ) to the pressure supply port P. Thereupon, firstly the check valve member 19 is a little opened by a hydraulic pressure within the pressure supply port P against a small resilient force of the valve closing spring 20 so as to increase the pressure within the first chamber 11. Then, the short-circuit prevention valve member 23 is opened by the hydraulic pressure within the first chamber 11 against the return valve member closing spring 30.

Thereby, as shown in Fig. 2(a), the pressurized oil is supplied from the pressure supply port P to the working port A so as to extend the hydraulic cylinder 7. Under the pressure supply condition X, the return valve member 22 is brought into contact with the return valve seat 16 for valve closing by means of a resultant force of the resilient force of the return valve member closing spring 30 and the interior pressure of the second chamber 12. The interior pressure of the second chamber 12 acts on a valve closing pressure receiving area S₃ as an annular area obtained by subtracting the received pressure removing cross sectional area S₁ of the received pressure removing chamber 27 from the pressure non - receiving cross sectional area S₂ of, the return valve seat 16 so as to apply a downward valve closing force onto the return valve member 22.

After the short-circuit prevention valve member 23 is once closed, the downward received pressure produced by the interior pressure of the second chamber 12 corresponding to the received pressure removing cross sectional area S₁ is applied there to so as to keep its valve opened condition. Therefore, even though the flow of the pressurized oil entering the second chamber 12 from the pressure supply port P through the first chamber 11 is varied by a pulsation of a delivery quantity of the hydraulic pump and the like, the short-circuit prevention valve member 23 doesn't cause a chattering differently from the check valve member 119 of the first conventional embodiment ( refer to Fig. 7 ) and the check valve member 219 of the second conventional embodiment ( refer to Fig. 8 ). Resultantly, a generation of noises can be prevented and a damage of the valve surface 23a of the short-circuit prevention valve member 23 can be prevented. Further, since the short-circuit prevention valve member 23 is kept in the fully opened condition during supply of the pressure, a flow resistance of the pressurized oil can be small and an extending speed of the hydraulic cylinder 7 is high.

Further, since the stopped portion 34 is adapted to be received by the stopper portion 33, the valve opening movement of the short-circuit prevention valve member 23 is limited to the aforementioned valve opening lift M. Thereby, between the piston portion 25 of the return valve member 22 and the short-circuit prevention valve member 23 there is provided a contact prevention clearance N effective during supply of the pressure, formed in a dimension obtained by subtracting the valve opening lift M from the valve opening clearance L.

Under the pressure supply condition X as shown in Fig. 2(a), when the load imposed to an output portion 7b of the hydraulic cylinder 7 is increased as the hydraulic cylinder 7 extends, the pressures within the working chamber 7a and the working port A are increased. Accompanying therewith, when the pressures within the second chamber 12 and the first chamber 11 are increased to become substantially equal to the pressure with in the pressure supply port P, as shown in Fig. 2(b), the check valve member 19 is automatically brought into contact with the pressure supply valve seat 15 for valve closing by means of the resilient force of the check valve member closing spring 20. Thereby, though a little pressure leak is caused on the side of the pressure supply port P, the lowering of the interior pressure of the valve chamber 4 is surely prevented so as to attain the pressure keeping condition Y. Under this pressure keeping condition Y, since the contact prevention clearance N is provided between the return valve member 22 and the short-circuit prevention valve member 23, only the valve closing force acting on the annular valve closing pressure receiving area S₃ is applied to the return valve member 22. Thereby, a damage of the synthetic resin valve surface 22a of the return valve member 22 is prevented.

On one hand, when contracting the hydraulic cylinder 7, the piston 39 is driven upward against the resilient force of the return spring 41 by supplying the compressed air to the actuation chamber 40 of the return operation means 37. Thereupon, as shown in Fig. 2(c), the return valve member 22 is pushed and opened by means of the valve opening member 43 so that the pressurized oils within the working port A and the second chamber 12 are discharged to the return port R as well as the short-circuit prevention valve member 23 is brought into contact with the short-circuit prevention valve seat 17 for valve closing by means of the valve opening member 43 through the return valve member 22 and the short-circuit prevention transmitting portion 32 in order. Thereby, the pressurized oil with in the pressure supply port P is prevented from leaking from the first chamber 11 into the second chamber 12.

In the above-mentioned case, the operation force required for opening the return valve member 22 can be small only enough to surpass the interior pressure acting on the annular valve closing pressure receiving area S₃. Therefore, the return operation means 37 can be one requiring a light operation force, and the diameter of the pneumatic cylinder 38 can be made small. Further, during the pressure releasing operation of the return operation means 37, since the valve surface 22a having a large area, of the return valve member 22 is soon separated from the return valve seat 16 by means of the valve opening member 43, a passage having a large cross-sectional area can be provided and the flow resistance can be small. Resultantly, since the pressurized oil within the second chamber 12 is allowed to flow out in a large quantity to the return port R, the returning time of the hydraulic cylinder 7 can be made short though the hydraulic cylinder 7 is of a spring returned type.

In the initial stage of the pressure releasing operation, the compressed air entered the pneumatic actuation chamber 40 reaches a predetermined pressure with repeating pressure pulsations similarly to the above-mentioned conventional embodiments. Even though the short-circuit prevention valve member 23 repeats its opening and closing operations relative to the short-circuit prevention valve seat 17 during these pressure pulsations, the valve surface 23a of the short-circuit prevention valve member 23 and the short-circuit prevention valve seat 17 are hardly damaged because of their metal-to-metal contact construction. Even though they are damaged due to an accumulated number of the returning operations, a practical disadvantage is not provided because the prevention of the pressure leakage under the pressure keeping condition shown in Fig. 2(b) is accomplished by the check valve member 19 differently from the respective conventional embodiments.

By the way, when the compressed air is discharged from the actuation chamber 40 of the return operation means 37 after the completion of the contraction of the hydraulic cylinder 7, the valve opening member 43 is retreated downward through the piston 39 and the piston rod 42 so as to be changed over to the pressure keeping condition X shown in Fig. 2(a).

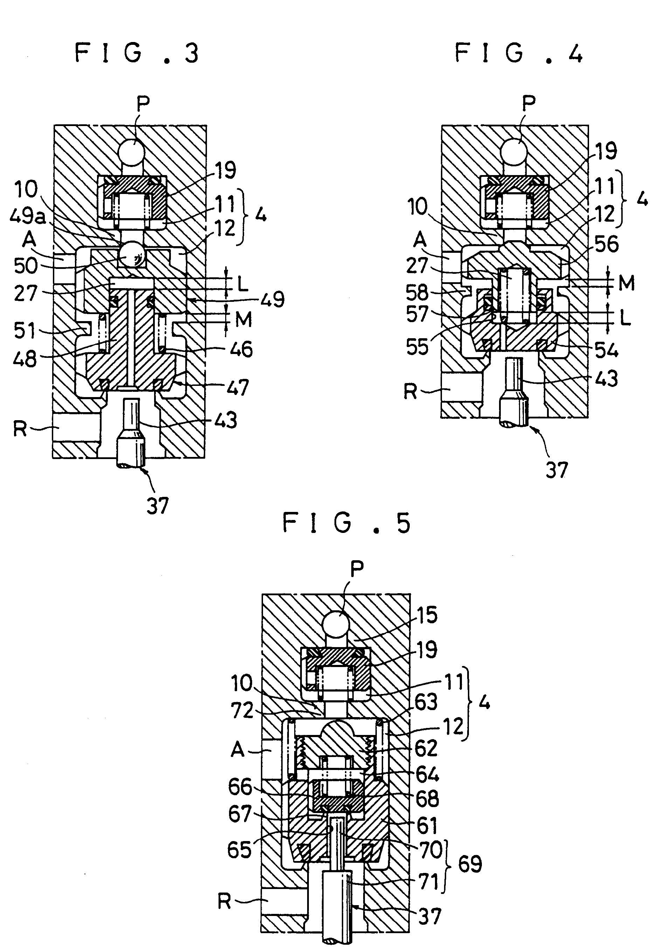

Figs. 3 through 6 show other embodiments respectively and their constructions different from the first embodiment will be explained. Incidentally, component members having the same constructions as those of the first embodiment are designated with the same symbols.

### [Second Embodiment]

Fig. 3 shows a second embodiment.

A return valve member closing spring 46 is mounted to the outer periphery of a piston portion 48 of a return valve member 47 between the return valve member 47 and the short-circuit prevention valve member 49.

A valve surface 49a of the short-circuit prevention valve 49 is formed by an outer peripheral surface of a metallic spherical body 50 fitted in the upper portion of the short-circuit prevention valve member 49.

Further, a stopper portion 51 for limiting the valve opening movement of the short-circuit prevention valve member 49 to the valve opening lift M is projected from the peripheral wall of the inner wall of the second chamber 12.

### [Third Embodiment]

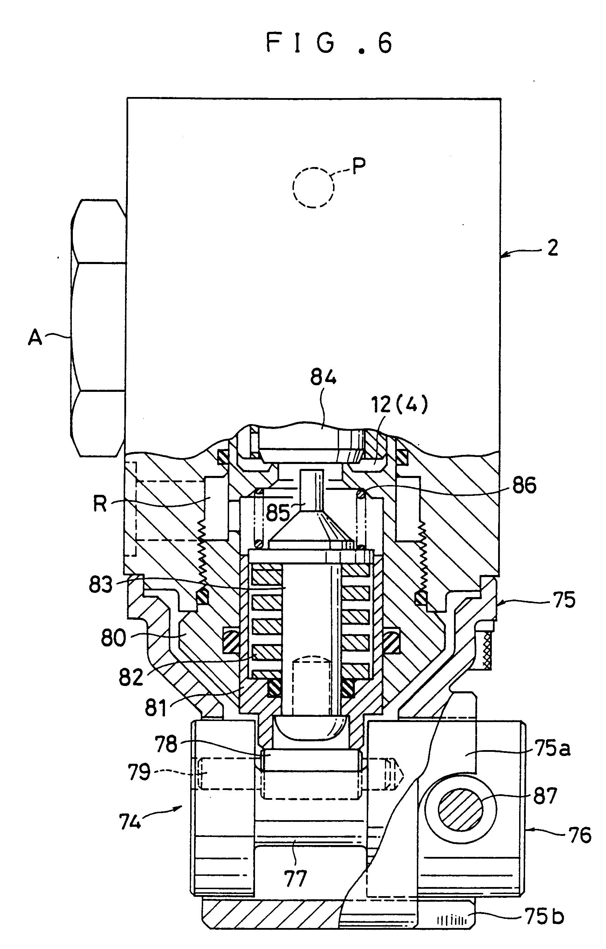

Fig. 4 shows a third embodiment.

A fitting hole 55 is formed in a concaved shape in the upper end surface of the return valve member 54, and a piston portion 57 is projected downward from a short-circuit prevention valve member 56.

Incidentally, a stopper portion 58 of the short-circuit prevention valve member 56 is projected from the peripheral wall of the second chamber 12 similarly to the embodiment shown in Fig. 3.

### [Fourth Embodiment]

Fig. 5 shows a fourth embodiment.

In this case, both valve members 61, 62 are formed in an integrated manner by threadably securing the short-circuit prevention valve member 62 to the upper portion of the return valve member 61. A return valve member closing spring 63 is mounted between the return valve member 61 and the upper wall of the second chamber 12. A pressure releasing valve chamber 64 communicating with the second chamber 12 is formed within both the valve members 61, 62, and the pressure releasing valve chamber 64 and the return port R are intercommunicated with each other by means of a pressure releasing hole 65. A pressure releasing valve member 66 inserted into the pressure releasing valve chamber 64 is brought into contact with a pressure releasing valve seat 67 formed in the upper periphery of the pressure releasing hole 65 for valve closing by means of a pressure releasing valve member closing spring 68. A valve opening member 69 of the return operation means 37 is composed of a pressure releasing valve opening member 70 and a return valve opening member 71 arranged in order from above.

At the time of pressure releasing operation carried out by the return operation means 37, after the pressure within the second chamber 12 is released by opening the pressure releasing valve member 66 by means of the pressure releasing valve opening member 70, the return valve member 61 is adapted to be opened with a light force by means of the return valve opening member 71 and the short-circuit prevention valve member 62 is adapted to be brought into contact with the short-circuit prevention valve seat 72 for valve closing through the return valve member 61.

Incidentally, though the pressure supplying port P and the first chamber 11 are arranged substantially coaxially with the second chamber 12 in the above-mentioned respective embodiments, they may be arranged in such a direction as intersecting the axis of the second chamber 12.

### [Fifth Embodiment]

Fig. 6 shows a fifth embodiment.

This embodiment employs a return operation means 74 constructed as a maneuvering type and has the following construction.

A pivot shaft 76 is rotatably supported by the lower portion of a bracket 75 fixedly secured to the valve box 2. The central portion of the pivot shaft 76 in the right and left direction has a reduced diameter, and a pushing roller 78 is supported by a pin 79 at an eccentric position outside the reduced diameter portion 77. On one hand, a pushing cylinder 81 is inserted into a valve cover 80 so as to be opposed to the pushing roller 78. A valve opening actuation rod 8,3 is resiliently urged upward within the cylindrical hole of the pushing cylinder 81 through a pushing spring 82. A valve opening member 85 for a return valve member 84 is formed in the upper portion of the rod 83, and the rod 83 is resiliently urged downward by means of a return spring 86.

This return operation means 74 operates as follows.

As illustrated, under such a condition as having changed over an actuation lever 87 fixedly secured to the right side of the pivot shaft 76 to an upward rotated position in which the lever 87 is received by an upper stopper 75a of the bracket 75, the pushing roller 78 is located on the lower side and both the rod 83 and the pushing cylinder 81 are retreated downward by means of the return spring 86.

When the valve assembly is changed over to the pressure releasing, the aforementioned operation lever 87 is swung downward so as to be changed over to a downward rotated position in which the lever 87 is received by a lower stopper 75b of the bracket 75. Thereupon, the pivot shaft 76 rotates and the pushing roller 78 moves to the upper position so as to advance the rod 83 upward through the pushing cylinder 81 and the pushing spring 82 in order and then to open the return valve 84.

## Claims

1. Control valve assembly for a pressurized oil comprising :
- a valve chamber (4) having a fist end side and a second end side opposed to each other ;
- a pressure supply port (P) opened to the first end side of the valve chamber (4)
- a return port (R) opened to the second end side of the valve chamber (4) ;
- a working port (A) opened to the valve chamber (4) at a location out of both these ports ;
- a pressure supply valve seat (15) formed in the opening edge portion of said pressure supply port (P) ;
- a return valve seat (16) formed in the opening edge portion of said return port (R)
- a check valve member (19) inserted into the first end side of the valve chamber (4) and resiliently urged to the pressure supply valve seat (15) for valve closing by means of a check valve member closing spring (20) ;
- a return valve member (22) inserted into the second end side of the valve chamber (4) and resiliently urged to the return valve seat (16) by means of a return valve member closing spring (30) ; and
- a return operation means (37) provided with a valve opening member (43) adapted to push the return valve member (22) toward the first end side,
characterized in that the valve chamber (4) is divided into a first chamber (11) on the first end side and a second chamber (12) on the second end side by means of a intermediate partition wall (10) provided with a communication hole (13) between both chambers (11,12), and in that it comprises a short circuit prevention valve member (23) inserted into said second chamber (12), and a short-circuit prevention valve seat (17) formed in the opening edge portion of the communication hole (13) on the side of the second chamber, said short-circuit prevention valve member (23) and said short-circuit prevention valve seat (17) being brought into contact with each other for valve closing through hard sealing members, and under a pressure released condition in which said return operation means (37) is operated, said short-circuit prevention valve member (23) being brought into contact with the short-circuit prevention valve seat (17) for valve closing through the return valve member (22) by means of said valve opening member advanced toward the first end side, and thereby a pressurized oil within said pressure supply port (P) being prevented from leaking from the first chamber to the second chamber.

2. Control valve assembly according to claim 1,
characterized in that said check valve member (19) is provided with a valve surface (19a) which is composed of said resilient sealing member (21).

3. Control valve assembly according to one of claims 1 to 2,
characterized in that said return valve member (22) is provided with a valve surface (22a) which is composed of another resilient sealing member.

4. Control valve assembly according to one of claims 1 to 3,
characterized in that said return valve member (22) and said short-circuit prevention valve member (23) are separately formed, and between both these valve members are provided a valve opening clearance (L) and a short-circuit prevention transmitting portion (32), so that, under the pressure released condition in which said return operation means (37) is operated, said valve opening member is adapted to bring the short-circuit prevention valve member (23) into contact with the short-circuit prevention valve seat (17) for valve closing through the return valve member (22) and the short-circuit prevention transmitting portion (32) in order.

5. Control valve assembly according to one of claims 1 to 4,
characterized in that a fitting hole (55) is formed in a concaved shape in one of the opposed end surfaces of both said return valve member (54) and said short-circuit prevention valve member (56), in that the other valve member is movably and oil-tightly inserted into the fitting hole (55), and a received pressure removing chamber is disposed between both said valve members in a partitioned manner from the second chamber, and in that said received pressure removing chamber has its received pressure removing cross-sectional area made smaller than a pressure non-receiving cross-sectional area defined in the return valve seat (16) and is communicated with the return port (R) through the communication hole formed in the return valve member (54).

6. Control valve assembly according to one of claims 4 to 5,
characterized in that second chamber (12) is provided with a stopper portion (51,58) which limits the valve opening movement of the short-circuit prevention valve member (49,56) to a valve opening lift, and this valve opening lift is set in a smaller dimension than said valve opening clearance.

7. Control valve assembly according to one of claims 1 to 6,
characterized in that said short-circuit prevention valve member (23,49,56) is resiliently urged to the short-circuit prevention valve seat (17,72) for valve closing by means of a return valve member closing spring (30,46,63).

## Patentansprüche

1. Steuerventileinrichtung für Drucköl mit:
- einer Ventilkammer (4) mit einer ersten Stirnseite und einer zweiten Stirnseite, die einander gegenüberliegen;
- einem Druckzuführport (P), der zur ersten Stirnseite der Ventilkammer (4) hin geöffnet ist;
- einem Rücklaufport (R), der zur zweiten Stirnseite der Ventilkammer (4) hin geöffnet ist;
- einem Arbeitsport (A), der zu der Ventilkammer (4) hin, außerhalb der Stelle dieser beiden Ports, geöffnet ist;
- einem Druckzuführventilsitz (15), der in dem sich öffnenden Randbereich des Druckzuführports (P) ausgebildet ist;
- einem Rücklaufventilsitz (16), der in dem sich öffnenden Randbereich des Rücklaufports (R) ausgebildet ist;
- einem Absperrventilteil (19), das in die erste Stirnseite der Ventilkammer (4) eingeführt ist und mittels einer Absperrventil-Schließfeder (20) elastisch gegen den Druckzuführventilsitz (15) gezwungen wird;
- einem Rücklaufventilteil (22), das in die zweite Stirnseite der Ventilkammer (4) eingeführt ist und mittels einer Rücklaufventilteil-Schließfeder (30) elastisch gegen den Rücklaufventilsitz (16) gezwungen wird; und
- einer Rücklaufbetätigungseinrichtung (37), die mit einem Ventilöffnungteil (43) versehen ist, das so ausgebildet ist, daß es das Rücklaufventilteil (22) gegen die erste Stirnseite schiebt,
dadurch gekennzeichnet, daß die Ventilkammer (4) in eine erste Kammer (11) auf der ersten Stirnseite und eine zweite Kammer (12) auf der zweiten Stirnseite mittels einer Zwischentrennwand (10), die mit einem Verbindungsloch (13) zwischen beiden Kammern (11, 12) versehen ist, unterteilt ist, und daß sie ein Überlaufverhinderungs-Ventilteil (23), das in die zweite Kammer (12) eingeführt ist, und einen Überlaufverhinderungs-Ventilsitz (17), der in dem sich öffnenden Randbereich des Verbindungsloches (13) auf der Seite der zweiten Kammer ausgebildet ist, umfaßt, wobei das Überlaufverhinderungs-Ventilteil (23) und der Überlaufverhinderungs-Ventilsitz (17) über harte Dichtungsteile zum Schließen des Ventils in Kontakt miteinander gebracht werden, und daß in einem druckentlasteten Zustand, in welchem die Rücklaufbetätigungseinrichtung (37) arbeitet, das Überlaufverhinderungs-Ventilteil (23) mittels des sich zur ersten Stirnseite vorbewegenden Öffnungsteils über das Rücklaufventilteil (22) in Kontakt mit dem Überlaufverhinderungs-Ventilsitz (17) zum Schließen des Ventils gebracht wird, und dadurch ein Drucköl innerhalb des Druckzuführports (P) daran gehindert wird, aus der ersten Kammer in die zweite Kammer auszulecken.

2. Steuerventileinrichtung nach Anspruch 1, dadurch gekennzeichnet, daß das Absperrventilteil (19) mit einer Ventiloberfläche (19a) versehen ist, die ein elastisches Dichtungsteil (21) enthält.

3. Steuerventileinrichtung nach einem der Ansprüche 1 und 2, dadurch gekennzeichnet, daß das Rücklaufventilteil (22) mit einer Ventiloberfläche (22a) versehen ist, die ein weiteres elastisches Dichtungsteil enthält.

4. Steuerventileinrichtung nach einem der Ansprüche 1 bis 3, dadurch gekennzeichnet, daß das Rücklaufventilteil (22) und das Überlaufverhinderungs-Ventilteil (23) getrennt ausgebildet sind und zwischen diesen beiden Ventilteilen ein Ventilöffnungsspalt (L) und ein ÜberlaufverhinderungsÜbertragungsabschnitt (32) vorgesehen ist, so daß im druckentlasteten Zustand, in welchem die Rücklaufbetätigungseinrichtung (37) betätigt wird, das Ventilöffnungsteil in der Lage ist, daß es über das Rücklaufventilteil (22) und den ÜberlaufverhinderungsÜbertragungsabschnitt (32) das Überlaufverhinderung-Ventilteil (23) in Kontakt mit dem Überlaufverhinderung-Ventilsitz (17) bringt und damit das Ventil schließt.

5. Steuerventileinrichtung nach einem der Ansprüche 1 bis 4, dadurch gekennzeichnet, daß eine als Sackloch ausgebildete Paßbohrung (55) in eine der gegenüberliegenden Stirnflächen des Rücklaufventilteils (54) oder des Überlaufverhinderung-Ventilteils (56) eingebracht ist, daß das andere Ventilteil bewegbar und öldicht in die Paßbohrung (55) eingeführt ist und eine Aufnahmedruck-Abführkammer zwischen diesen beiden Ventilteilen abgetrennt von der zweiten Kammer angeordnet ist, und daß die Aufnahmedruck-Abführkammer eine Querschnittsfläche aufweist, die kleiner ist als die nicht druckaufnehmende Querschnittsfläche des Rücklaufventilsitzes (16), und über die Verbindungsöffnung, die in dem Rücklaufventilteil (54) ausgebildet ist, mit dem Rücklaufport (R) verbunden ist.

6. Steuerventileinrichtung nach einem der Ansprüche 4 bis 5, dadurch gekennzeichnet, daß die zweite Kammer (12) mit einem Anschlag (51, 58) versehen ist, der die Ventilöffnungsbewegung des Überlaufverhinderungs-Ventilteils (49, 56) auf einen Ventilöffnungshub begrenzt, und dieser Ventilöffnunghub auf ein kleineres Maß eingestellt ist, als der Ventilöffnungsspalt.

7. Steuerventileinrichtung nach einem der Ansprüche 1 bis 6, dadurch gekennzeichnet, daß das Überlaufverhinderungs-Ventilteil (23, 49, 56) zum Schließen des Ventils mittels einer Rücklaufventilteil-Schließfeder (30, 46, 63) elastisch in den Überlaufverhinderungs-Ventilsitz (17, 72) gedrückt wird.

## Revendications

1. Dispositif de commande de soupape par huile sous pression comprenant :
- une chambre de soupape (4) ayant un premier côté d'extrémité et un second côté d'extrémité, opposés l'un à l'autre ;
- un orifice d'alimentation de pression (P) ouvert sur le premier côté d'extrémité de la chambre de soupape (4) ;
- un orifice de refoulement (R) ouvert sur le second côté d'extrémité de la chambre de soupape (4) ;
- un orifice de travail (A) ouvert sur la chambre de soupape (4) à un emplacement différent de ces deux orifices ;
- un siège de soupape d'alimentation de pression (15) formé dans la partie de côté d'ouverture dudit orifice d'alimentation de pression (P) ;
- un siège de soupape de refoulement (16) formé dans la partie de côté d'ouverture dudit orifice de refoulement (R) ;
- un élément de soupape de retenue (19) inséré dans le premier côté d'extrémité de la chambre de soupape (4) et pressé, de façon élastique, sur le siège de soupape d'alimentation de pression (15) pour fermer la soupape par l'intermédiaire d'un ressort (20) de fermeture de l'élément de soupape de retenue ;
- un élément de soupape de refoulement (22) inséré dans le second côté d'extrémité de la chambre de soupape (4) et pressé, de façon élastique, sur le siège de soupape de refoulement (16) par l'intermédiaire d'un ressort (30) de fermeture de l'élément de soupape de refoulement ; et
- des moyens opérationnels de refoulement (37) munis d'un élément d'ouverture de soupape (43) adapté pour pousser l'élément de soupape de refoulement (22) vers le premier côté d'extrémité,
caractérisé en ce que la chambre de soupape (4) est divisée en une première chambre (11) sur le premier côté d'extrémité et en une seconde chambre (12) sur le second côté d'extrémité au moyen d'une paroi de séparation intermédiaire (10) munie d'un trou de communication (13) entre les deux chambres (11,12) et en ce qu'il comprend un élément de soupape de prévention de coupure (23) inséré dans ladite seconde chambre (12), et un siège de soupape de prévention de coupure (17) formé dans la partie de côté d'ouverture du trou de communication (13) sur le côté de la seconde chambre, ledit élément de soupape de prévention de coupure (23) et ledit siège de soupape de prévention de coupure (17) étant amenés en contact l'un avec l'autre pour fermer la soupape par des éléments d'étanchéité durs, et sous une condition de relâchement de pression dans laquelle lesdits moyens opérationnels de refoulement (37) sont actionnés, ledit élément de soupape de prévention de coupure (23) étant amené en contact avec le siège de soupape de prévention de coupure (17) pour fermer la soupape via l'élément de soupape de retour (22) au moyen dudit élément d'ouverture de soupape avancé vers le premier côté d'extrémité, et par conséquent de l'huile sous pression à l'intérieur dudit orifice d'alimentation de pression (P) étant empêchée de fuir de la première chambre vers la seconde chambre.

2. Dispositif de commande de soupape selon la revendication 1,
caractérisé en ce que ledit élément de soupape de retenue (19) est muni d'une surface de soupape (19a) qui est composée dudit élément d'étanchéité élastique (21).

3. Dispositif de commande de soupape selon l'une des revendications 1 à 2,
caractérisé en ce que ledit élément de soupape de refoulement (22) est muni d'une surface de soupape (22a) qui est composée d'un autre élément d'étanchéité élastique.

4. Dispositif de commande de soupape selon l'une des revendications 1 à 3,
caractérisé en ce que ledit élément de soupape de refoulement (22) et ledit élément de soupape de prévention de coupure (23) sont formés de façon séparée, et entre ces deux éléments de soupapes sont prévus un jeu d'ouverture de soupape (L) et une partie de transmission de prévention de coupure (32), de sorte que, sous une condition relâchée de pression dans laquelle lesdits moyens opérationnels de refoulement (37) sont actionnés, ledit élément d'ouverture de soupape est adapté pour amener l'élément de soupape de prévention de coupure (23) en contact avec le siège de soupape de prévention de coupure (17) pour fermer la soupape par l'intermédiaire de l'élément de soupape de refoulement (22) et de la partie de transmission de prévention de coupure (32) dans cet ordre.

5. Dispositif de commande de soupape selon l'une des revendications 1 à 4,
caractérisé en ce qu'un trou approprié (55) est formé, selon une forme concave, dans l'une des surfaces d'extrémité opposées dudit élément de soupape de refoulement (54) et dudit élément de soupape de prévention de coupure (56), en ce que l'autre élément de soupape est inséré, de façon déplaçable et étanche, dans le trou approprié (55), et une chambre d'évacuation de la pression reçue est disposée entre lesdits éléments de soupape de façon séparée de la seconde chambre, et en ce que ladite chambre d'évacuation de pression reçue a son aire de section transversale reçue plus petite que l'aire de section transversale ne recevant pas la pression définie dans le siège de soupape de refoulement (16) et est en communication avec l'orifice de refoulement (R) par l'intermédiaire du trou de communication formé dans l'élément de soupape de refoulement (54).

6. Dispositif de commande de soupape selon l'une des revendications 4 à 5,
caractérisé en ce que la seconde chambre (12) est munie de butées (51,58) qui limitent le mouvement d'ouverture de l'élément de soupape de prévention de coupure (49,56) à une hauteur d'ouverture de la soupape, et cette hauteur d'ouverture de la soupape est réglée à une plus petite dimension que ledit jeu d'ouverture de la soupape.

7. Dispositif de commande de soupape selon l'une des revendications 1 à 6,
caractérisé en ce que ledit élément de soupape de prévention de coupure (23,49,56) est poussé, de façon élastique, sur le siège de soupape de prévention de coupure (17,72) pour fermer la soupape par l'intermédiaire d'un ressort (30,46,63) de fermeture de l'élément de soupape de refoulement.
